Europäisches Patentamt

European Patent Office

Office européen des brevets

(19)

(11) Veröffentlichungsnummer: **0 275 393 B1**

# (12) EUROPÄISCHE PATENTSCHRIFT

(45) Veröffentlichungstag der Patentschrift: **18.09.91**

(51) Int. Cl.⁵: **B01D 53/18, C04B 38/00**

(21) Anmeldenummer: **87116827.4**

(22) Anmeldetag: **14.11.87**

(54) Verfahren zur Herstellung eines aus mehreren Lagen bestehenden keramischen Körpers.

(30) Priorität: **15.12.86 CH 4980/86**

(43) Veröffentlichungstag der Anmeldung:
**27.07.88 Patentblatt 88/30**

(45) Bekanntmachung des Hinweises auf die
Patenterteilung:
**18.09.91 Patentblatt 91/38**

(84) Benannte Vertragsstaaten:
**AT BE DE ES FR GB IT NL SE**

(56) Entgegenhaltungen:
**DE-A- 2 807 755**
**DE-A- 3 128 603**

(73) Patentinhaber: **GEBRÜDER SULZER AKTIENGE-
SELLSCHAFT**
**Zürcherstrasse 9**
**CH-8401 Winterthur(CH)**

(72) Erfinder: **Kubicek, Vladimir**
**Gratstrasse 9**
**CH-8472 Seuzach(CH)**

## Beschreibung

Die Erfindung betrifft ein Verfahren zur Herstellung eines aus mehreren Lagen bestehenden keramischen Körpers gemäss Oberbegriff von Anspruch 1.

Zur Herstellung keramischer Körper der vorstehend genannten Art war es bisher üblich wie z.B. in DE-A-3 128 603 und DE-A-2 807 755 beschrieben entweder einzelne Lagen herzustellen und diese miteinander zu verbinden, z.B. durch Verwendung keramischer oder fremder Verbindungsmaterialien, wie z.B. Kunststoff oder, wenn der keramische Körper als ganzes gebrannt wurde, jeden einzelnen Füllkörper mit einer zeitraubenden Arbeit in die endgültige Form durch Schneiden bzw. Sägen zu bringen.

Zumal wenn diese Körper als Füllkörper in zylindrischen Kolonnen verwendet werden sollen, kann nicht vermieden werden, dass bei dieser Verarbeitung das spröde Material mindestens an den Grenzflächen abbricht.

Nach einem Verfahren mit verlorenen Formen können derartige keramische Körper auch samt Verbindungsstellen in einem Stück gegossen werden.

Hierbei soll der Brennvorgang direkt auf den Trocknungsvorgang folgen, bei im wesentlichen rückstandsloser Verbrennung und/oder Vergasung der Form.

Wenn auch dieses Verfahren als solches vorteilhaft ist, so weist es doch den wesentlichen Nachteil auf, dass eine schwierige und aufwendige Verarbeitung der gebrannten Füllkörper zu geordneten Einbauten insbesondere in Kolonnen erforderlich ist.

Aus der CH-PS 619 202 ist ein Verfahren zur Herstellung eines porösen, form-, hitze- und korrosionsbeständigen flächenhaften Gebildes aus Glasfäden oder Glasfaserbündeln bekannt. Hierbei wird auf der Oberfläche der Glasfäden oder oder Glasfaderbündeln ein Ueberzug aus einer brennfähigen keramischen Masse erzeugt. Während des Brennens schmelzen die Glasfäden bzw. Glasfasern an ihren Kreuzungsstellen zusammen, wobei während des Schmelzvorganges die keramische Schale als skelettartige tragende Struktur wirkt.

Die flächenartigen Gebilde bilden Lagen eines Füllkörpers. Sie können entweder im gebrannten Zustand aufeinandergeschichtet werden zur Erzeugung eines Füllkörpers oder aber vor dem Brennen zu einem Füllkörper zusammengestellt werden, sodass sich beim Brennen die einzelnen Lagen miteinander verbinden. Diese bekannten Herstellungsverfahren weisen die eingangs erläuterten Nachteile auf.

Der Erfindung liegt demgegenüber die Aufgabe zugrunde auf kostengünstige und einfache Weise einen keramischen Körper der eingangs geschilderten Art herzustellen.

Diese Aufgabe wird erfindungsgemäss dadurch gelöst, dass zwischen dem Trocknungs- und dem Brennvorgang der Körper im grünen Zustand auf seine endgültige Form zugeschnitten wird.

Vorteilhafte Ausführungsform der Erfindung sind in den Kennzeichen der Ansprüche 2 und 3 angegeben.

Die Erfindung wird im folgenden anhand der Zeichnungen erläutert.

Die Fig. 1 zeigt eine perspektivische Darstellung, teilweise im Schnitt, eines Teiles einer Form, die mit keramischer Suspension bzw. keramischer Masse gefüllt ist, im getrockneten Zustand und

Fig. 2 eine Variante eines Füllkörpers.

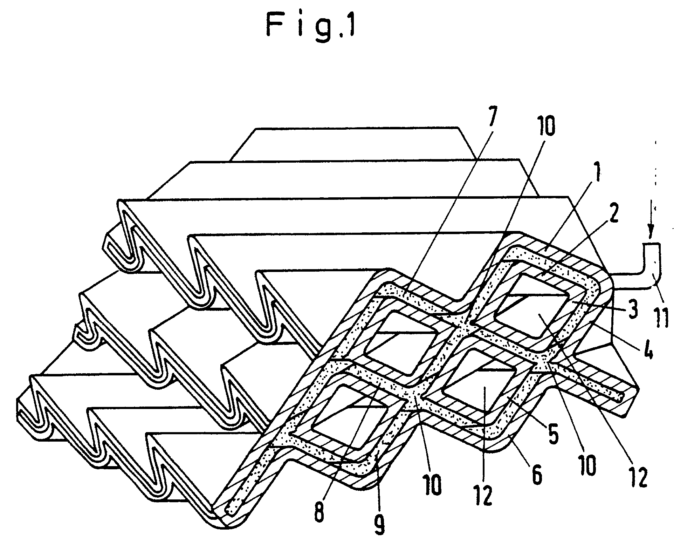

Jeweils zwei geformte Schalen bzw. Lagen 1,2; 3,4; 5,6 aus saugförmiger Zellulosemasse, z. B. Kartonmasse (Fig. 1) sind übereinandergestapelt unter Bildung von Formhohlräumen 7, 8, 9. Diese sind durch Durchlässe 10 miteinander verbunden. An der Form befindet sich eine Einfüllöffnung 11.

Zur Durchführung des Verfahrens wird die Form mit nicht dargestellten Seitenwänden versehen und eine keramische Komponenten enthaltende dickflüssige Suspension, bestehend aus Kaolin, Feldspat, Quarz und Wasser sowie Soda in die Einfüllöffnung 11 gegossen. Hierbei fliesst die Suspension durch die Durchlässe 10 von einer Lage zur anderen und füllt die Formhohlräume zwischen den Lagen. Es findet ein Dräniervorgang statt, in dem die Flüssigkeit der Suspension entzogen und durch die Kartonmasse aufgesaugt wird. In einem nicht dargestellten Trocknungsofen wird die Form während ca. sechs Stunden bei ca. 70 °C getrocknet, in dem die feuchte Luft abgeführt wird, wobei die Hohlräume 12 die Abfuhr der feuchten Luft erleichtern. Nach Beendigung wird der noch von der Form umschlossene Füllkörper im grünen, d. h. ungebrannten Zustand auf die endgültige Form beispielsweise mit einer Bandsäge zugeschnitten. Bei dieser Ausführungsweise gibt die noch erhaltene Form dem Füllkörper den nötigen Halt bzw. die erforderliche Festigkeit für den Schneidvorgang. Der Füllkörper selbst befindet sich noch im weichen (plastischen) Zustand und kann daher auf einfache Weise auf jede gewünschte Form zugeschnitten werden. Nach beendigtem Zuschneiden wird die Form mit dem Füllkörper in einen Ofen gebracht und dort auf eine Brandtemperatur von ca. 1400 °C erhitzt und ca. drei Stunden bei dieser Temperatur gehalten, wobei die Verbrennungsgase fortgeschafft werden, bis nur noch der fertige keramische Körper zurückbleibt.

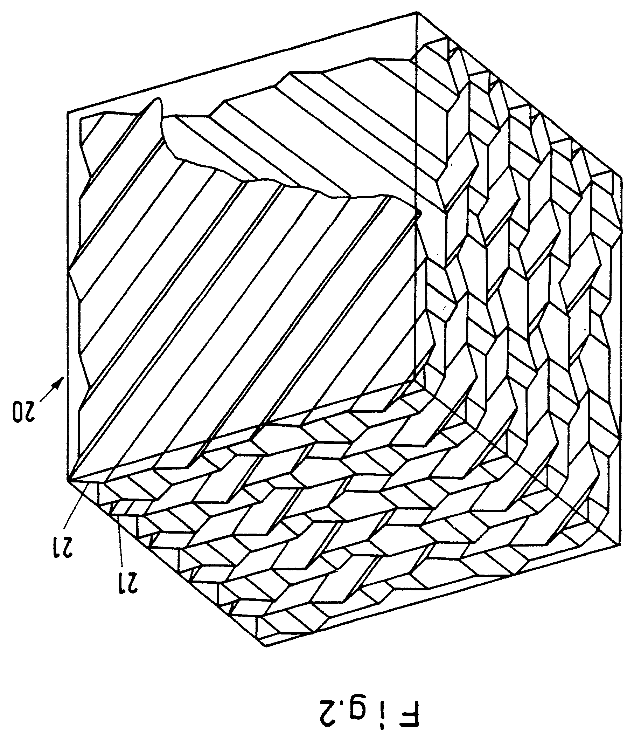

Der in Fig. 2 dargestellte Füllkörper 20 ist durch Aufeinanderschichten von gewellten Lage 21 gebildet.

Diese Lagen bestehen aus Glasfäden bzw. Glasfaserbündeln, die mit einem Bindemittel, z. B. kolloidaler Kieselsäure getränkt sind. Sodann werden die flächenartigen Gebilde getrocknet und wellblechartig verformt. Anschliessend werden sie aufeinandergeschichtet und der so entstandene Füllkörper in eine mit keramischem Pulver aufgeschlämmte Lösung eingetaucht und getrocknet. Der Füllkörper wird nun im grünen Zustand auf seine endgültige Form in analoger Weise zu Fig. 1 zugeschnitten und dann in einem Brennofen gebrannt. Während des Brennvorganges schmelzen die Glasfäden und werden an ihren Berührungspunkten miteinander verschmolzen. Nach dem Brennvorgang erhält man ein poröses, form-, hitze- und korrosionsbeständiges Gebilde.

## Patentansprüche

1. Verfahren zur Herstellung eines aus mehreren Lagen bestehenden keramischen Körpers, insbesondere Füllkörper für Stoff- bzw. Wärmeaustausch- oder Mischvorrichtungen, wobei die Lagen eine wellen- bzw. zickzackförmige Struktur aufweisen, und sich die Richtungen der Wellen bzw. Zacken von benachbarten Lagen kreuzen, wobei der keramische Körper einem Trocknungs- und einem Brennvorgang unterzogen wird, dadurch **gekennzeichnet,** dass zwischen dem Trocknungs- und dem Brennvorgang der Körper im grünen Zustand auf seine endgültige Form zugeschnitten wird.

2. Verfahren nach Anspruch 1 dadurch gekennzeichnet, dass man vor dem Trocknungsvorgang eine keramische Komponenten enthaltende Suspension in eine aus mehreren Lagen zusammengesetzte Form aus organischem, dränierfähigem Material bringt, wobei die Suspension über Formhohlräume der Lagen gleichmässig verteilt wird und durch die Form der Suspension soviel Flüssigkeit entzogen wird, dass eine keramische Masse in den Formhohlräumen zwischen den einzelnen Lagen zurückbleibt, und dass sodann die Form mitsamt der keramischen Masse in einem Ofen getrocknet wird, und dass nach dem Zuschneiden auf Form die keramische Masse in einem Ofen gebrannt bzw. gesintert wird bei im wesentlichen rückstandsloser Verbrennung und/oder Vergasung der Form.

3. Verfahren nach Anspruch 1, dadurch gekennzeichnet, dass man vor dem Trocknungsvorgang den Körper durch Aufeinanderschichten von einzelnen, aus Glasfäden bzw. Glasfaserbündeln bestehenden, mit einem Bindemittel getränkten Lagen bildet und den Körper in eine keramische Lösung eintaucht, und dass sodann der Körper getrocknet und nach dem Zuschneiden auf Form in einem Ofen gebrannt wird, wobei die Glasfäden bzw. Glasfaserbündel an ihren Berührungsstellen miteinander verschmelzen.

## Claims

1. A method of producing a ceramic member consisting of a plurality of layers, more particularly a packing for mass transfer, heat-exchange, or mixing devices, the layers having a corrugated or zig-zag structure and the directions of the corrugations or zags of adjacent layers crossing one another, the ceramic member being subjected to a drying and a firing operation, characterised in that the member in the green state is cut to its final shape between the drying operation and the firing operation.

2. A method according to claim 1, characterised in that before the drying operation a suspension containing ceramic components is brought into a mould made up of a plurality of layers and consisting of organic drainable material, the suspension being uniformly distributed via mould cavities of the layers, and liquid being withdrawn from the suspension through the mould to the extent such that a ceramic mass is left in the mould cavities between the individual layers, and in that the mould together with the ceramic mass is then dried in an oven, and in that after cutting to shape the ceramic mass is fired or sintered in an oven, the mould being burnt and/or gasified so that there is substantially no residue.

3. A method according to claim 1, characterised in that before the drying operation the member is formed by stacking discrete layers one upon the other, such layers consisting of glass filaments or bunches of glass fibres and impregnated with a binder, and the member is immersed in a ceramic solution, and in that the member is then dried and, after cutting to shape, is fired in an oven, the glass filaments or bunches of glass fibres fusing together at their points of contact.

## Revendications

1. Procédé de fabrication d'un corps céramique constitué de plusieurs couches, notamment corps de remplissage pour échangeur de matières ou de chaleur ou dispositif de mélange, les couches présentant une structure ondulée ou en zigzag et les directions des ondulations ou des zigzags de couches adjacentes se croisant, le corps céramique étant soumis à un séchage et à une cuisson, caractérisé en ce qu'entre le séchage et la cuisson, le corps à l'état cru est coupé à sa forme définitive.

2. Procédé selon la revendication 1, caractérisé en ce qu'avant le séchage, on amène une suspension contenant un composant céramique dans un moule composé de plusieurs couches en matière organique pouvant être drainée, la suspension étant uniformément répartie sur des cavités de moule des couches et du liquide étant prélevé de la suspension à travers le moule, en une quantité suffisante pour qu'il reste dans les cavités de moule, entre les différentes couches, une masse céramique, et en ce qu'ensuite le moule est séché avec la masse céramique dans un four et en ce qu'après découpe à la forme souhaitée, la masse céramique est cuite ou frittée dans un four avec combustion pratiquement sans résidus et/ou gazéification du moule.

3. Procédé selon la revendication 1, caractérisé en ce qu'avant le séchage, le corps est formé par superposition de couches constituées de fils de verre ou de fibres de verre réunies, imprégnées d'un liant, et le corps est immergé dans une solution céramique, et en ce qu'ensuite le corps est séché puis cuit dans un four, après avoir été découpé à la forme voulue, les fils ou fibres de verre étant assemblés entre eux par fusion sur leurs points de contact.

# Fig.1

# F i g.2